(19) Europäisches Patentamt
European Patent Office
Office européen des brevets

(11) Publication number: 0 241 100 A1

# (12) EUROPEAN PATENT APPLICATION

(21) Application number: 87200673.9

(22) Date of filing: 09.04.87

(51) Int. Cl.4: C08G 69/40 , C08G 69/16 , C08G 69/20 , C08G 69/48 , C08G 81/00

(30) Priority: 10.04.86 US 850457

(43) Date of publication of application: 14.10.87 Bulletin 87/42

(84) Designated Contracting States: AT BE CH DE ES FR GB IT LI NL SE

(71) Applicant: DSM RIM NYLON V.O.F
Karveelweg 3
NL-6222 NJ Maastricht(NL)

(72) Inventor: Silverman, Bernard
302 Lyonnais
St. Louis Missouri 63141(US)
Inventor: Hedrick, Ross M.
300 Chasselle Lane
St. Louis Missouri 63141(US)
Inventor: Mottus, Edward H.
850 Claymont Drive
Ballwin Missouri 63011(US)

(74) Representative: Hoogstraten, Willem Cornelis Roeland et al
OCTROOIBUREAU DSM Postbus 9
NL-6160 MA Geleen(NL)

## (54) High impact nylon block copolymer compositions.

(57) Polyacyllactams comprising one or more polyhydrocarbon block and one or more polyether block wherein the polyhydrocarbon block is derived from a polyhydrocarbon of number average molecular weight in the range of 500 to 10,000 and the polyether block is derived from a polyether of number average molecular weight in the range of 60 to 2,000 and wherein the weight ratio of polyhydrocarbon to polyether in the polyacyllactam product is in the range of 1 : 1 to 9 : 1.

EP 0 241 100 A1

Xerox Copy Centre

## HIGH IMPACT NYLON BLOCK COPOLYMER COMPOSITIONS

The present invention relates to polyacyllactams useful in the preparation of nylon block copolymers and to nylon block copolymers so formed. More particularly, the present invention relates to polyacyllactams useful in the production of nylon block copolymers having high impact strength and a slow rate of moisture absorption.

Polymers containing polyamide segments and segments of another material have been disclosed in the art and are herein referred to as "nylon block copolymers". A combination of polyamide segments and segments of another polymeric material allows for the obtaining of block copolymers with unique combinations of properties. The properties can be varied by varying the polyamide and/or other polymeric segments in the block copolymer. Particularly useful are those block copolymers which contain alternating hard and soft segments. The hard segments (i.e., $T_g$ or $T_m$above room temperature) provide thermoplasticity and the soft segments (i.e., $T_g$ below room temperature) provide elastomeric behavior; and in combination, the alternating hard and soft segments provide toughened rigid systems suitable for use in the manufacture of fibers, fabrics, films and molding resins.

Nylon block copolymers made from polyacyllactams having elastomeric backbone segments derived from either an ether or a hydrocarbon have been previously disclosed. Those derived from an ether yield nylon block copolymers have good impact strength but have a fast rate of moisture absorption; those derived from a hydrocarbon, on the other hand, have a slow rate of moisture absorption but have low impact strength.

It has now been found that, by incorporating a polyacyllactam containing both a polyhydrocarbon block and a polyether block into the nylon block copolymer, both good impact strength and a slow rate of moisture absorption may be attained in the same copolymer.

The present invention is directed to a polyacyllactam comprising one or more polyhydrocarbon block and one or more polyether block wherein the polyhydrocarbon block is derived from a polyhydrocarbon of number average molecular weight in the range of about 500 to about 10,000, preferably about 1,500 to about 5,000, and wherein the polyether block is derived from a poly-ether of number average molecular weight in the range of about 60 to about 2,000, preferably about 100 to about 600, and wherein the weight ratio of polyhydrocarbon block to polyether block is in the range of about 1:1 to about 99:1, preferably about 3:1 to about 50:1, and wherein the weight ratio when more than one polyhydrocarbon or polyether block are present being the weight ratio of the sum of the polyhydrocarbon blocks to the sum of the polyether blocks.

Another aspect of the invention is directed to a nylon block copolymer formed by reacting the polyacyllactam of the invention with a lactam monomer, preferably ε-caprolactam, lauryllactam, or 2-pyrrolidinone, in the presence of a basic lactam polymerization catalyst. The nylon block copolymer may be formed by conventional techniques or by a reactive fabrication process, such as reaction injection molding (RIM).

The polyacyllactam is advantageously of number average molecular weight in the range of about 700 to about 10,000 and advantageously has at least two acyllactam terminal groups which act as initiator groups for lactam polymerization to form the nylon block copolymer.

The acyllactam terminal groups include those represented by the formula:

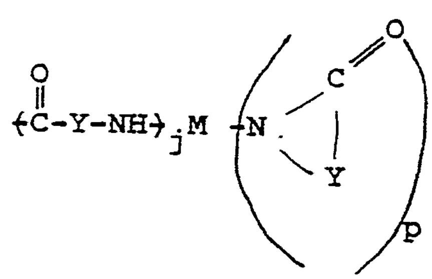

where M is

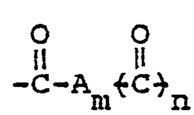

; A is a polyvalent aliphatic or or aromatic hydrocarbyl or hydrocarbyl ether group; m and j are independently 0 or 1; when m is 0, n is 0 or 1 and p is 1; when m is 1, n is 1 to 3 and p = n; and Y is a $C_3$ to $C_{11}$ alkylene group. Preferably m, n and p are 1, A is meta-or para-phenylene, and Y is a $C_3$ or $C_5$ alkylene group.

Preferred polyacyllactams have (a) at least two terminal groups of the formula:

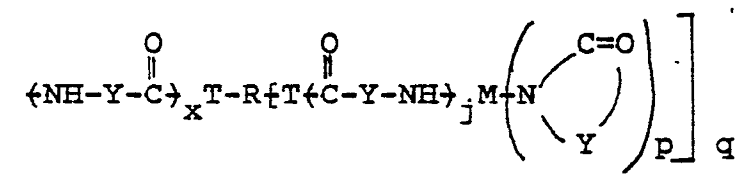

wherein M, Y, j and p are as previously defined, q is in the range of 1 to 3, x is 0 or 1, T is oxygen or NH, and R is a polyether block derived from a polyether having a number average molecular weight in the range of about 28 to about 600; and (b) an elastomeric backbone comprising a polyhydrocarbon block derived from a polyhydrocarbon of number average molecular weight in the range of about 1,500 to 5,000; and wherein the weight ratio of the polyhydrocarbon block to the polyether block is in the range of about 3:1 to 50:1, and wherein the weight ratio when more than one polyhydrocarbon or polyether block are present being the weight ratio of the sum of the polyhydrocarbon blocks to the sum of the polyether blocks.

Polyhydrocarbon blocks useful in practicing the invention are derived from alkylenes ($C_8$ and above), polybutadienes, butadiene copolymers, such as butadiene-styrene and butadiene-acrylonitrile copolymers, and polyisoprene of number average molecular weight in the range of about 500 to about 10,000, preferably about 1,500 to about 5,000. Preferred are hydrocarbon polyols and polyamines which have at least two, and preferably at least three, hydroxy or primary or secondary amine groups which provide a convenient means of incorporating the polyhydrocarbon blocks into the polyacyllactam. Exemplary polyols containing hydrocarbon blocks are alkylene ($C_8$ and above) glycols; polybutadiene diols, triols, tetrols and even higher polyols; and butadiene copolymer polyols. Preferred hydrocarbon polyols are those in which the hydrocarbon blocks are derived from polybutadiene, butadiene-acrylonitrile copolymer, butadiene-styrene copolymer, and polyisoprene. Exemplary polyamines containing polyhydrocarbon blocks are alkylene diamines; polybutadiene diamine, triamine, tetramine, and even higher polyamines; and butadiene copolymer polyamines. Preferred hydrocarbon polyamines are those in which the polyhydrocarbon blocks are derived from polybutadiene, butadiene-acrylonitrile copolymer, butadiene-styrene copolymer, and polyisoprene.

Polyether blocks useful in practicing the invention are derived from polyoxyalkylenes having a number average molecular weight in the range of about 60 to about 2000, preferably about 100 to about 600. Preferred are polyoxyalkylene polyols and polyamines which have at least two, and preferably at least three, hydroxy or primary amine groups which provide a convenient means of incorporating the polyether blocks into the polyacyllactam. Exemplary polyols containing polyether blocks are ethylene glycol; propylene glycol; tetramethylene glycol; poly(oxyethylene) glycol; poly(oxybutylene) glycol; poly(oxypropylene) diol, triol, and tetrol; and block copolymer polyols of oxypropylene and oxyethylene. Exemplary polyamines containing polyether blocks, the diamines, triamines and tetramines of polyoxyethylene, polyoxypropylene, and polyoxytetramethylene.

A number of methods of incorporating elastomeric blocks into a polyacyllactam are known in the art. Examples of those formed from polyamines, such as those available from Texaco Chemical Company under the tradename JEFFAMINE®, may be found in USP 4,490,520; of those formed from polyols in USP RE 30,371; and of those formed from other functionalized polymers containing elastomeric blocks, in French Publication No. 2,322,165, published March 25, 1977; and British Pat. No. 1,067,153.

One method for making a polyacyllactam comprises the following steps: (1) reacting a polyether polyol with a stoichiometric excess of an acid halide of the formula $X\text{-}M(X)_n$, wherein M is

$$-\overset{O}{\overset{\|}{C}}-A_m(\overset{O}{\overset{\|}{C}})_n$$

wherein A is a polyvalent aliphatic or aromatic hydrocarbyl or hydrocarbyl ether group; m is 0 or 1; n is 0 or 1 when m is 0 and n is 1 to 3 when m is 1; and X is chlorine or bromine; (2) reacting a stoichiometric excess of the product of step (1) with a hydrocarbon polyol; and (3) reacting the product of step (2) with

lactam monomer to yield the polyacyllactam. Steps (1) and (2) are preferably carried out in the presence of an anhydrous non-interfering solvent, e.g. cyclohexane, toluene, tetrahydrofuran, or acetone, to facilitate removal of the hydrogen halide generated. It is also possible to carry out the reaction neat with the hydrogen halide being driven off with heat, vacuum, nitrogen sweeping or the like. When a solvent is used, a basic material, such as a tertiary amine, which acts as an acid scavenger to produce a byproduct which is insoluble in the solvent may be employed. Steps (1) and (2) can be carried out under essentially ambient conditions and will proceed even more rapidly at higher temperatures, e.g. 30° to 150°C. Precise temperatures for the reaction may depend upon the nature of the solvent. If a solvent is used, it can be removed after the reaction by distillation.

In Steps (1) and (2), essentially all of the hydroxy groups in the polyols are reacted with an acid halide group to link the polyhydrocarbon and polyether blocks and to provide acyl halide terminal groups of the formula -O-M-X. The product of Step (2) can be isolated prior to reacting it with lactam monomer, or it can be formed in situ and reacted with the lactam monomer without isolation.

Step (3), the reaction of the acid halide containing polyhydrocarbon and polyether blocks with lactam monomer to prepare the polyacyllactam, can be conveniently carried out neat or in the presence of a solvent, e.g. cyclohexane, toluene, acetone, or excess lactam monomer, and an acid scavenger to facilitate removal of the hydrogen halide generated in the reaction. The previous discussion regarding the use of solvent and reaction conditions in connection with Steps (1) and (2) applies to Step (3) equally.

In an alternative method, the product of Step (1) may be reacted according to Step (3) to yield a polyacyllactam prepolymer containing only a polyether block which may then be reacted with a hydrocarbon polyol prior to exposure to lactam polymerization conditions. If the reaction is carried out in the presence of lactam monomer, then preferential reaction of the polyol with the polyacyllactam prepolymer is accomplished either by choice of reaction conditions or by use of a catalyst specific for the imide-alcohol condensation, referred to herein as Catalyst I. Catalysts advantageously used as Catalyst I are alkali and alkaline earth metals, zinc, cadmium, manganeses, iron, nickel, cobalt, tin, lanthanum, lead or bismuth or combinations thereof, salts such as calcium, manganese, cobalt or zinc acetate, lithium hydride, sodium alcoholates, zinc succinate or zinc acetyl acetonate, oxides such as lead oxide (PbO), antimony oxide ($Sb_2O_3$), or germanium oxide ($GeO_2$), magnesium methoxide, and combinations such as antimony trioxide, manganese acetate or antimony trioxide/titanium dioxide. Other suitable catalysts include magnesium pyrrolidinone, magnesium bromide alkoxides, for example, the reaction product of Grignard and phenol, caprolactam magensium bromide, and selected Grignard agents, for example, ethyl magnesium bromide. Catalyst I is used in quantities of from about 0.005 to about 0.2% by weight, preferably about 0.01 to about 0.10% by weight based on the quantity of polyhydrocarbon polyol. The above-described imide-alcohol condensation to form the polyacyllactam prepolymer and catalysts useful are further disclosed in USP RE 30,371, incorporated herein by reference.

Polyacyllactams can be prepared from polyamines by at least two processes.

In a first process, a polyether polyamine with at least two amine groups is reacted directly at an elevated temperature with a poly-acyllactam monomer of the structure:

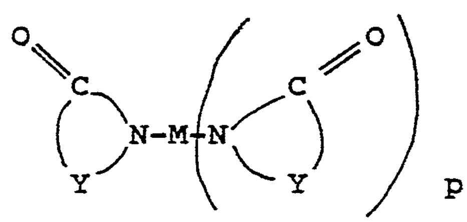

wherein M, Y, and p are as previously defined. Advantageously, the equivalents of lactam groups are in slight excess of the equivalents of amine groups. In this process, the lactam end groups react with the amine groups of the polyamine to form an amide linkage. An example of this reaction, in which M is difunctional, is as follows:

y $P(NH_2)_w$ + z 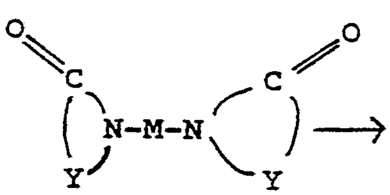 polyacyllactam

wherein $z \geq \frac{1}{2}(yw + 2)$ and $P\text{-}(NH_2)_w$ is a polyether polyamine containing at least 2 , preferably 2 to 4, amine groups. It is recognized that, when this process is used to prepare polyacyllactams, the bis-acyllactam may couple two or more polyamines in addition to providing terminal groups. The polyacyllactam prepolymer thus formed can then be reacted with a hydrocarbon polyol or polyamine to form a polyacyllactam according to the invention. Alternatively, the polyacyllactam prepolymer can be formed from a polyhydrocarbon polyamine which can then be reacted with a polyether polyol or polyamine to form an equivalent polyacyllactam.

In an example of a second process, wherein, for illustrative purposes, a diacid halide of the structure:

X-M-X

wherein M is as previously defined for n = 1, and X is chlorine or bromine, is complexed with a secondary or tertiary amine, $NR_3$, to yield:

$R_3N{\bullet}X\text{-}M\text{-}X{\bullet}NR_3$

which is then reacted with sufficient lactam monomer to yield:

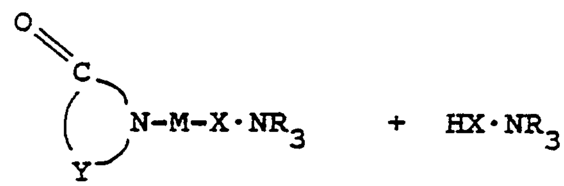

Finally this acyllactam monoacid halide amine complex is reacted with a polyhydrocarbon or polyether polyamine to yield the desired polyacyllactam prepolymer. Advantageously, the equivalents of acid halide groups are in slight excess of the equivalents of amine groups on the polyamine. In this process the halide groups react with the amine groups in the polyamine to form an amide linkage and a substituted ammonium byproduct. An example of this reaction is as follows:

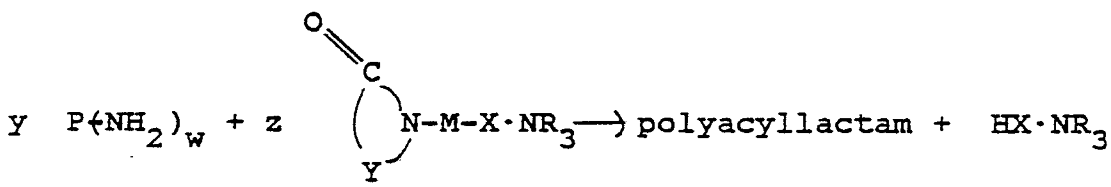

wherein $z \geq yw$ and $P\text{-}(NH_2)_w$ is as previously described. Again, as in the first process described, but to a lesser extent due to the fact that the predominate lactam reactant has a single reactive group, any diacid halide formed may couple two or more polyamines in addition to providing terminal groups. The polyacyllactam thus formed can then be reacted with a polyol or polyamine containing a polyhydrocarbon block, if the prepolymer contains a polyether block, or a polyether block, if the prepolymer contains a polyhydrocarbon block, to yield a polyacyllactam according to the invention.

The polyamine may advantageously be formed from a polyol by replacing the hydroxy groups with amine groups according to the procedure described in USPs 3,155,728 and 3,236,896 or according to other procedures known to those skilled in the art. Due to the process for forming these compounds, it is expected that there may be some residual hydroxy groups. Alternatively, nitrile-containing oligomers may be amine-functionalized by selective reduction of the nitrile groups, using a $LiAlH_4$ catalyst, and formyl-containing oligomers may be amine-functionalized by reductively aminating the formyl groups.

Polyacyllactams containing both polyhydrocarbon and polyether blocks may be formed by reacting a polyacyllactam prepolymer containing a polyether block and amide linkages with a polyhydrocarbon polyol or polyamine or by reacting the acylhalide precursor with a hydrocarbon polyol or polyamide as previously described. Those skilled in the art will recognize other sequences of reaction which will yield equivalent polyacyllactams.

Equivalent polyacyllactams may also be formed in situ from polyacyllactam precursors, such as acylhalides, isocyanates, and ketenes which are capable of rapidly forming the polyacyllactams when dissolved in lactam monomer.

Lactam monomers suitable for preparing the polyacyllactams and nylon block copolymers of the invention are those containing from 3 to 11 alkylene groups. Preferred, based on their reactivity and availability, are those containing 3 or 5 alkylene groups. When the polyacyllactam is used to prepare nylon block copolymers by the reaction with ε-caprolactam monomer in the presence of a suitable catalyst, the

resulting copolymer is generally comprised of the polyacyllactam to which are attached polyamide chains having repeat units of the general structure: (-CO-Y-NH-) wherein Y is a pentamethylene group. While the copolymer is essentially prepared from ε-caprolactam, other lactam monomers may be included so long as the reaction rate or degree of caprolactam polymerization is not substantially impaired. The number-average molecular weight of the resulting block copolymer may vary widely and is advantageously in the range from about 18,000 to about 100,000. The molecular weight is generally dependent upon the molar ratio of caprolactam monomer and polyacyllactam. Generally, the amount of used is at least about 0.1 mole percent of the total molar amount of caprolactam monomer used, and more preferably, from 0.25 to 1.0 mole percent. A more detailed description of a particular type of nylon block copolymer can be found in USP 4,031,164, which is incorporated herein by reference.

The lactam polymerization catalyst useful herein, labeled Catalyst II in Table 1, includes that class of compounds commonly recognized as suitable basic catalysts for the anhydrous polymerization of lactams. In general, all alkali or alkaline earth metals are effective either in metallic form or in the form of hydrides, halohydrides, alkylhalides, oxides, hydroxides, carbonates and the like. Such catalysts are more fully described in USP 4,031,164. Particularly useful for the lactam polymerization is a $C_3$ to $C_{12}$ lactam magnesium halide, preferably derived from lactam selected from the group consisting of ε-caprolactam and 2-pyrrolidinone and more preferably the catalyst is selected from ε-caprolactam magnesium bromide, (2-oxo-1-tetrahydroazepinyl magnesium bromide), and 2-pyrrolidinone magnesium bromide, (2-oxo-1-pyrrolidinyl magnesium bromide). The amount of catalyst used is an amount which gives an appreciable rate of polymerization. Advantageously, the amount of magnesium lactam polymerization catalyst for the practice of the present invention is in the range of 0.3 to 1.6 mole percent based on the total molar amount of ε-caprolactam monomer and, preferably, from about 0.6 to about 1.2 mole percent. The reaction rate is dependent upon the concentration of catalyst being used and other parameters such as the temperature at which the reaction is being carried out.

The following examples illustrate, but are not intended to limit, the invention. Parts and percentages are by weight unless otherwise indicated. The physical properties given for the examples were obtained using tests substantially in accordance with the following procedures:

Notched Izod Impact Strength: ASTM D256 (units are joules per meter,J/m)

Standard Exotherm: A 30 gauge iron constantan thermocouple connected to a recording potentiometer, is positioned within a mold. The mold is heated to 140° Celcius (C). A final reaction mixture is heated to about 100°C and is introduced into the mold by pumpcasting and the temperature response is recorded. The thermal trace starts an immediate rise due to heat contributed by the mold and the initial exotherm of the lactam polymerization. Before the temperature levels, a second sharp rise may occur, which is believed to be due to heat of crystallization and heat from the final stage of polymerization. The polymerization is considered to be complete when the temperature reaches a maximum and starts to fall. The mass is quite solid and the molded article may now be removed from the mold. The reaction time is the time interval betewen the addition of the reaction mixture to the mold and the attainment of maximum temperature. The overall reaction rate is considered to be proportional to the time for the temperature rise.

Moisture Absorption: A sample approximately 5 cm x 1.3 cm x 0.3 cm is dried for 48 hrs. at 70°C. (100 mm Hg), weighed and its length measured with a dial caliper. It is then submerged in water at ambient for 24 hrs. patted dry with an absorbant material, and reweighed and remeasured.

EXAMPLES 1-11

Examples 1-7 are according to the invention and illustrate the improved impact strength and decreased rate of moisture absorption obtained when compared to control Examples 8-11. The proportions of reactants are given in Table 1. All polybutadiene was provided by ARCO® Polybd R-45 HT having an approximate molecular weight of 3000 and an average of about 2.5 hydroxy groups per molecule. The prepolymers used herein were prepared by the method disclosed for the preparation of acyllactam functional materials in U.S. Application Serial No. 467,626, incorporated herein by reference. The physical properties of the nylon block copolymers formed from each of the examples are given in Table 2. A comparison of the data for Examples 1-7 with that for Examples 8-11 illustrates the increased impact strength and improved hydrolytic stability attained when a polyacyllactam is prepared according to the invention.

The polyacyllactams of Example 1-7, 9 and 10 were prepared from three polyether-containing polyacyllactam prepolymers of the following structure:

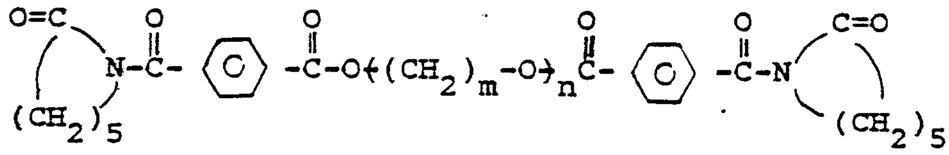

| Prepolymer | m | n | Example |
|---|---|---|---|
| I | 2 | 4 | 1-4, 7, 9, 10 |
| II | 2 | 3 | 5 |
| III | 3 | 3 | 6 |

The polyether-containing polyacyllactam prepolymer used to prepare Example 11 was used at a level such that the final block copolymer contained 16 wt.% polypropylene oxide and 4 wt.% polyethylene oxide.

Nylon block copolymers were prepared from each of the examples by preparing first and second reaction compositions containing the substituents given in Table 1. The first reaction compositions were prepared as follows: For Examples 1-6, after heating the caprolactam, prepolymer and polybutadiene to between 130° and 140°C, the magnesium bis-pyrrolidinone catalyst was added. The mixture was then held at between 125° and 140°C under vacuum (20 torr Hg) for about 2-3 hours. For the remaining Examples 7-11 the substituents of the first reaction compositions were heated to 120°-130°C to dissolve and were degassed prior to using.

The second reaction compositions for all the examples were prepared by melting the caprolactam/catalyst mixture at 130° until clear.

The first and second reaction compositions were then injected into a 140°C 1/8" mold using a reaction injection molding (RIM) machine. The peak temperature of the standard exotherm was achieved in all examples in less than 5 minutes, and normally less than 3 minutes. A plaque is removed from the mold after about 15 minutes for physical property measurements. The results for each nylon block copolymer are displayed in Table 2.

EXAMPLES 1-6

Examples 1-6 are according to the invention and were prepared by reacting a polybutadiene polyol with one of Prepolymers I, II or III in the presence of a catalyst, Catalyst I in Table 1, capable of accelerating the reaction of the polyol with the prepolymer prior to any substantial lactam polymerization. Table 1 gives the proportions, prepolymer, polybutadiene, and catalyst used for each example.

EXAMPLE 7

Example 7 is also according to the invention and illustrates a similar imrpovement in properties as was obtained in Examples 1-6. Example 7 differs from Examples 1-6 in that the polyacyllactam of the invention was isolated prior to adding ε-caprolactam monomer.

Preparation of the Polyacyllactam

29.3 g tetraethylene glycol in 80 ml dry toluene was added over a 30 minute period to 151.4 g terephthaloyl chloride and 152.5 g of triethylamine in 550 ml dry toluene. After adding 34.2 g ε-caprolactam, the mixture was heated for about 1 hour at 80°C, cooled, filtered, and washed with dry toluene. The filtrate was then vacuum distilled at 100 mm Hg until 900 ml toluene were removed. To the remaining filtrate 200 g ARCO® polybutadiene in 70 ml dry toluene were added and distillation was resumed until an increase in viscosity was observed. The remaining mixture was heated to about 110°C and a catalyst solution containing 0.9 g phenol, 20 ml toluene, and 3 ml ethylmagnesium bromide was added dropwise, resulting in

a temperature increase to about 115°C. After heating the mixture at 115°C for about 1 hour, it was cooled, 2 g of Ionol® antioxidant were added, and stripped to a constant weight of 304.1 g. 82.2 g of this polyacyllactam containing both polybutadiene and tetraethylene glycol segments were reacted with ε-caprolactam to form a nylon block copolymer by the same procedure as that used for Examples 1-6.

EXAMPLE 8

Example 8 is a control and was prepared from a polyacyllactam containing only polybutadiene segments and no polyether segments. A comparison of the impact strength for control Example 8 with that for Examples 1-7 illustrates the improvement obtained when some of the polybutadiene segments are replaced by polyether segments. The polyacyllactam was prepared from ARCO Polybd R-45 HT, previously described, by the method disclosed in U.S.P. 4,581,419 for the preparation of acyllactam functional materials.

The first reaction composition containing the polyacyllactam and caprolactam was degassed at 120°C. and then injected into a 140°C. 1/8" mold simultaneously with the second reaction composition containing Catalyst II dissolved in caprolactam. A plaque was removed after 10 minutes for physical property measurements.

EXAMPLES 9 AND 10

Examples 9 and 10 are controls and are not according to the invention. In Examples 9 and 10 the polyol and polyacyllactam prepolymer were not pre-reacted, either in situ or as in Example 7, to form the polyacyllactam prior to formation of the nylon block copolymer. A comparison of the impact strength for these two examples with that for those according to the invention illustrates the improvement obtained when the polyacyllactam is preformed prior to exposure to lactam polymerization conditions.

EXAMPLE 11

Example 11 is a control and was prepared by forming a polyacyllactam containing only polyether segments and no polybutadiene segments. A comparison of the rate of moisture absorption for Example 11, as reflected in the increase in weight and length when immersed in water, when compared with that of Example 1 illustrates the improvement obtained when a polyacyllactam containing both polyhydrocarbon and polyether segments is incorporated into the nylon block copolymer. The polyacyllactam was formed by the following procedure: 22.7 g caprolactam were dissolved in 100 ml dry toluene in a 1-liter flask and the mixture was cooled to 90°C; 30 ml of triethylamine were added and the mixture was brought to reflux. At reflux, 20.3 g terephthaloyl chloride in 100 ml toluene were added dropwise, and the mixture was refluxed an additional 10 minutes. After cooling to 85-90°C., 150 ml 90°C. water were added, the mixture was stirred, and the organic layer was washed twice. The product containing terephthaloyl bis-caprolactam was transferred to a 1-liter flask containing 200 g Niax® 11-34, an ethylene oxide capped poly(oxypropylene) triol having a molecular weight of about 4,800. Approximately 50 ml toluene was distilled under vacuum; a catalyst solution containing 0.7g phenol, 2.2 ml ethylmagnesium bromide, and 20 ml toluene was added dropwise; and the mixture was refluxed for an additional 15 minutes. The solution was cooled, and the solvent was distilled. Yield: 233.5 g.

To prepare the nylon block copolymer of Example 11, first and second reaction compositions were prepared and injected into a 140°C. 1/8" mold according to the procedure described previously for Examples 1-6.

## TABLE 1

Reaction Compositions

(in grams except where indicated)

| | First | | | | Second | |
|---|---|---|---|---|---|---|
| Ex. | Poly-butadiene | Pre-polymer | Capro-lactam | Catalyst I[1] | Capro-lactam | Catalyst II[2] |
| 1 | 106 | 51 | 344 | 4.5 | 74 | 39 |
| 2 | 53 | 25 | 196 | 2 | 43 | 20 |
| 3 | 106 | 50 | 369 | 4 | 74 | 39 |
| 4 | 39 | 20 | 215 | 1.5 | 42 | 21 |
| 5 | 54 | 24 | 196 | 1.5 | 43 | 20 |
| 6 | 53 | 25 | 197 | 1.5 | 43 | 20 |
| 7 | 82[3] | | 193 | --- | 43 | 19 |
| 8 | 71[4] | --- | 179 | --- | 43 | 20 |
| 9 | 106 | 51 | 369 | --- | 74 | 39 |
| 10 | 61[4] | 14 | 200 | --- | 43 | 20 |
| 11 | --- | 94 | 106 | --- | 178 | 27 |

[1] Examples 1, 2, 4-6: magnesium pyrrolidinone (1 meq/g in caprolactam); Example 3: bromomagnesium phenoxide (1 meq/g in caprolactam)

[2] Caprolactam magnesium bromide (1 meq/g in caprolactam)

[3] Preformed polyacyllactam containing both polybutadiene and polyether segments

[4] Polybutadiene supplied as a prepolymer rather than as a polyol

**TABLE 2**

Properties of Nylon Block Copolymers

| Ex. | % Poly-butadiene | % Ether | MW | % Length Increase* | % Weight Increase* | Izod Impact, notched, J/m | Standard Exotherm, Sec. |
|---|---|---|---|---|---|---|---|
| 1 | 17.6 | 2.4 | 30,000 | 0.19 | 1.52 | 672 | 105 |
| 2 | 17.6 | " | " | ---- | ---- | 992 | 90 |
| 3 | 17.6 | " | " | ---- | ---- | 1090 | 135 |
| 4 | 13.1 | 1.9 | " | ---- | ---- | 201 | 180 |
| 5 | 18.2 | 1.8 | " | ---- | ---- | 605 | 135 |
| 6 | 17.6 | 2.4 | " | ---- | ---- | 754 | 140 |
| 7 | 18.1 | 2.6 | 22,000 | ---- | ---- | 770 | 98 |
| 8 | 20 | 0 | 34,000 | 0.18 | 1.18 | 179 | 98 |
| 9 | 17.6 | 2.4 | 30,000 | ---- | ---- | 29.3 | 90 |
| 10 | 17.6 | 2.4 | 22,000 | ---- | ---- | 102 | 90 |
| 11 | 0 | 20 | 48,000 | 1.3 | 3.86 | 651 | 170 |

* Measured after one day in water at 20°C.

**Claims**

1. A polyacyllactam comprising one or more polyhydrocarbon block and one or more polyether block wherein the polyhydrocarbon block is derived from a polyhydrocarbon of number average molecular weight in the range of about 500 to about 10,000 and wherein the polyether block is derived from a polyether of number average molecular weight in the range of about 60 to about 2,000 and wherein the weight ratio of polyhydrocarbon block to polyether block is in the range of about 1 : 1 to about 99 : 1, and wherein the weight ratio when more than one polyhydrocarbon or polyether block are present being the weight ratio of the sum of the polyhydrocarbon blocks to the sum of the polyether blocks.

2. The polyacyllactam of claim 1 wherein the polyether block is selected from the group consisting of ethylene glycol, propylene glycol, tetramethylene glycol, polyethylene oxide, polypropylene oxide, polytetramethylene oxide, and combinations thereof.

3. The polyacyllactam of claim 1 or 2 wherein the polyhydrocarbon block is selected from the group consisting of polybutadiene, butadiene-acrylonitrile copolymer, butadiene-styrene copolymer, and polyisoprene.

4. The polyacyllactam of claim 1 wherein the polyhydrocarbon is of number average molecular weight in the range of about 1,500 to about 5,000 and the polyether is of number average molecular weight in the range of about 100 to about 600.

5. The polyacyllactam of claim 1 or 6 wherein the weight ratio of polyhydrocarbon block to polyether block is in the range of about 3 : 1 to about 50 : 1.

6. The polyacyllactam of claim 1 comprising at least two acyllactam terminal groups of the formula:

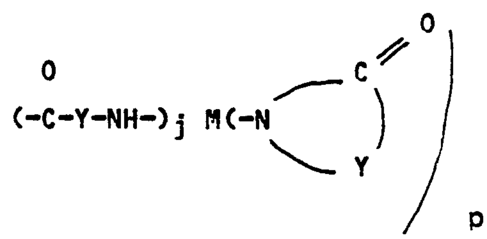

where M is

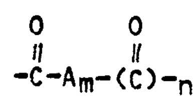

, A is a polyvalent aliphatic or aromatic hydrocarbyl or hydrocarbyl ether group; m and j are independently 0 or 1; when m is 0, n is 0 or 1 and p is 1; when m is 1, n is 1 to 3 and p = n; and Y is a $C_3$ to $C_{11}$ alkylene group.

7. The polyacyllactam of claim 6 wherein m, n and p are 1 and A is meta-or para-phenylene.

8. A polyacyllactam comprising:

(a) at least two terminal groups of the formula:

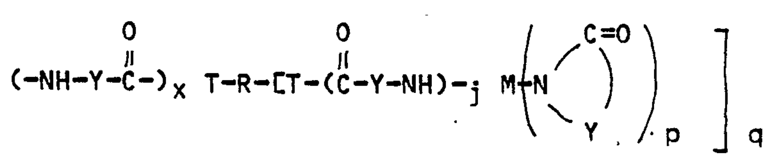

wherein Y is a $C_3$ to $C_{11}$ alkylene group, M is

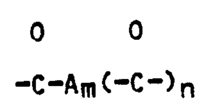

and x, j, and m is in the range of about 0 to about 1 with the constraint that when m is 0, n is 0 or 1 and p is 1 and whem m is 1, n is 1 to 3, and p = n; q is in the range of 1 to 3; T is oxygen or NH; and R is a

polyether block derived from a polyether having a molecular weight in the range of about 28 to about 600; and

(b) an elastomeric backbone comprising a polyhydrocarbon block derived from a polyhydrocarbon having a number average molecular weight in the range of about 1,500 to 5,000; and wherein the weight ratio of polyhydrocarbon block to polyether block is in the range of about 3 : 1 to 50 : 1, and wherein the weight ratio when more than one polyhydrocarbon or polyether block are present being the weight ratio of the sum of the polyhydrocarbon blocks to the sum of the polyether blocks.

9. The polyacyllactam of claim 8 wherein the polyhydrocarbon block is derived from an unsaturated hydrocarbon selected from the group consisting of polybutadiene, butadiene-acrylonitrile copolymer, butadiene-styrene copolymer.

10. The polyacyllactam of claim 8 wherein R is derived from a compound selected from the group consisting of ethylene glycol, propylene glycol, tetramethylene glycol, polyethylene oxide, polypropylene oxide, and polytetramethylene oxide.

11. The polyacyllactam of claim 9 wherein R is derived from a compound selected from the group consisting of ethylene glycol, propylene glycol, tetramethylene glycol, polyethylene oxide, polypropylene oxide, and polytetramethylene oxide.

12. The polyacyllactam of claim 8 wherein A is meta-or para-phenylene, or a combination thereof and m and n are 1.

13. A nylon block copolymer formed by reacting the polyacyllactam of claim 1 with ε-caprolactam or 2-pyrrolidinone in the presence of a basic lactam polymerization catalyst.

Claims for the following contracting State: AT

1. A process for the preparation of a polyacyllactam by reacting one or more polyhydrocarbon block and one or more polyether block wherein the polyhydrocarbon block is derived from a polyhydrocarbon of number average molecular weight in the range of about 500 to about 10,000 and wherein the polyether block is derived from a polyether of number average molecular weight in the range of about 60 to about 2,000 and wherein the weight ratio of polyhydrocarbon block to polyether block is in the range of about 1 : 1 to about 99 : 1, and wherein the weight ratio when more than one polyhydrocarbon or polyether block are present being the weight ratio of the sum of the polyhydrocarbon blocks to the sum of the polyether blocks.

2. The process of claim 1 wherein the polyether block is selected from the group consisting of ethylene glycol, propylene glycol, tetramethylene glycol, polyethylene oxide, polypropylene oxide, polytetramethylene oxide, and combinations thereof.

3. The process of claim 1 or 2 wherein the polyhydrocarbon block is selected from the group consisting of polybutadiene, butadiene-acrylonitrile copolymer, butadiene-styrene copolymer, and polyisoprene.

4. The process of claim 1 wherein the polyhydrocarbon is of number average molecular weight in the range of about 1,500 to about 5,000 and the polyether is of number average molecular weight in the range of about 100 to about 600.

5. The process of claim 1 or 6 wherein the weight ratio of polyhydrocarbon block to polyether block is in the range of about 3 : 1 to about 50 : 1.

6. The process of claim 1 comprising at least two acyllactam terminal groups of the formula:

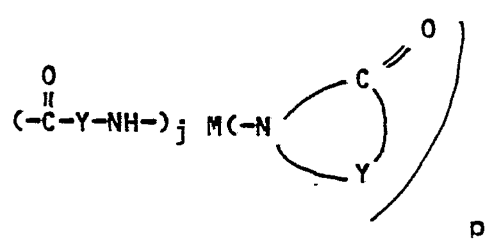

where M is

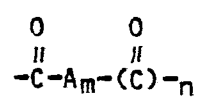

, A is a polyvalent aliphatic or aromatic hydrocarbyl or hydrocarbyl ether group; m and j are independently

0 or 1; when m is 0, n is 0 or 1 and p is 1; when m is 1, n is 1 to 3 and p = n; and Y is a $C_3$ to $C_{11}$ alkylene group.

7. The process of claim 6 wherein m, n and p are 1 and A is meta-or para-phenylene.

8. A process for the preparation of a polyacyllactam by reacting:

(a) a compound with at least two terminal groups of the formula:

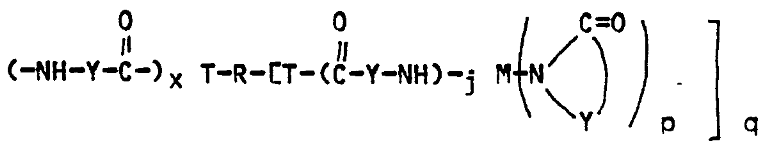

wherein Y is a $C_3$ to $C_{11}$ alkylene group, M is

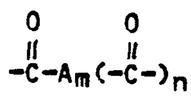

and x, j, and m is in the range of about 0 to about 1 with the constraint that when m is 0, n is 0 or 1 and p is 1 and whem m is 1, n is 1 to 3, and p = n; q is in the range of 1 to 3; T is oxygen or NH; and R is a polyether block derived from a polyether having a molecular weight in the range of about 28 to about 600; and

(b) an elastomeric backbone comprising a polyhydrocarbon block derived from a polyhydrocarbon having a number average molecular weight in the range of about 1,500 to 5,000; and wherein the weight ratio of polyhydrocarbon block to polyether block is in the range of about 3 : 1 to 50 : 1, and wherein the weight ratio when more than one polyhydrocarbon or polyether block are present being the weight ratio of the sum of the polyhydrocarbon blocks to the sum of the polyether blocks.

9. The process of claim 8 wherein the polyhydrocarbon block is derived from an unsaturated hydrocarbon selected from the group consisting of polybutadiene, butadiene-acrylonitrile copolymer, butadiene-styrene copolymer.

10. The process of claim 8 wherein R is derived from a compound selected from the group consisting of ethylene glycol, propylene glycol, tetramethylene glycol, polyethylene oxide, polypropylene oxide, and polytetramethylene oxide.

11. The process of claim 9 wherein R is derived from a compound selected from the group consisting of ethylene glycol, propylene glycol, tetramethylene glycol, polyethylene oxide, polypropylene oxide, and polytetramethylene oxide.

12. The process of claim 8 wherein A is meta-or para-phenylene, or a combination thereof and m and n are 1.

13. A process for the preparation of a nylon block copolymer by reacting the polyacyllactam of claim 1 with ε-caprolactam or 2-pyrrolidinone in the presence of a basic lactam polymerization catalyst.

European Patent Office

# EUROPEAN SEARCH REPORT

Application number

EP 87 20 0673

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 067 695 (MONSANTO) * claims * | 1-13 | C 08 G 69/40<br>C 08 G 69/16<br>C 08 G 69/20<br>C 08 G 69/48<br>C 08 G 81/00 |
| A | EP-A-0 067 694 (MONSANTO) * claims; page 45, lines 1-12 * | 1-13 | |
| A | EP-A-0 067 693 (MONSANTO) * claims; page 12, lines 5-14, 29-33; page 13, lines 1-4; page 14, lines 16-32; page 34, lines 1-32 * & US - A - 4 581 419 (Cat. A,D) | 1-13 | |
| A | EP-A-0 151 911 (MONSANTO) * claims; page 6, line 32 - page 7, line 36; page 8, lines 1-20 * | 1-13 | |
| | | | **TECHNICAL FIELDS SEARCHED (Int. Cl.4)** |
| A | EP-A-0 149 986 (MONSANTO) * claims; page 8, line 9 - page 9, line 33 * | 1-13 | C 08 G 69/00<br>C 08 G 81/00 |
| A | FR-A-2 322 165 (INSTITUT FRANCAIS DU PETROLE) * claims * | 1,8,13 | |
| A | US-A-4 031 164 (R.M. HEDRICK et al.) * claims; column 9, lines 14-38 * | 1,6,8, 13 | |

-----

The present search report has been drawn up for all claims

| Place of search | Date of completion of the search | Examiner |
|---|---|---|
| BERLIN | 03-07-1987 | BOEKER R.B. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82